# EUROPEAN PATENT APPLICATION

(11) **EP 1 844 727 A1**
(43) Date of publication of application: **17.10.2007**
(21) Application number: 06007741.9
(22) Date of filing: 12.04.2006
(51) Int. Cl.: A61C 3/00

(54) **Dental instrument for removing solely unremineralisable carious dentin**

(71) Applicant: 3M Innovative Properties Company, St. Paul, Minnesota 55133-3427 (US)
(72) Inventor: Kappler, Oliver, 82362 Weilheim (DE); Popp, Eva-Maria, 82229 Seefeld (DE); Hohmann, Arno, 81369 München (DE)
(74) Representative: Nägerl, Joël

(57) **Abstract**

A dental instrument (1) for use in removing unremineralizable carious dentin from a tooth while generally maintaining remineralizable carious dentin. The instrument comprises an instrument body (4) and an instrument head (3) having scraping elements (5) made of plastic. Also, a method of removing unremineralizable carious dentine from a tooth while generally maintaining remineralizable carious dentin, wherein the method comprises the use of the dental instrument (1).

## Description

### Field of the invention

The invention is related to a dental instrument for removing unremineralizable carious dentin from a tooth, comprising an instrument neck with an instrument head for removing unremineralizable carious dentin and an instrument body supporting the instrument neck, and a method of treating a caries-attacked tooth.

### Background of the Invention

Tooth decay is caused by caries that attacks the dentin of a healthy tooth. Carious dentin generally comprises a zone called "remineralizable carious dentin," and in most cases a second zone called "unremineralizable carious dentin." Remineralizable carious dentin includes an intact dentin structure, but is demineralised at least to some extent, while unremineralizable carious dentin normally lacks even an intact dentin structure. Although both expressions are used with reference to carious dentin, the term "unremineralizable carious dentin" shall also include dentin whose structure has been altered by a cause other than caries, e.g. by mechanical impact. Accordingly the term "unremineralizable carious dentin" shall also include dentin which is demineralized by an influence other than caries, e.g. by chemical and/or mechanical influence(s).

Remineralizable carious dentin has the potential to be healed and become healthy dentin if it is remineralized. This can be achieved, for example, by employing an appropriate filling therapy. It would therefore be desirable to maintain such remineralizable carious dentin during a caries removal treatment, to maintain as much natural tooth substance as possible, and to remove only the unremineralizable carious dentin.

From a dentist's point of view, carious dentin is often regarded as a material that has to be completely removed from the tooth so that only sound or healthy dentin remains prior to filling the cavity. There are instruments and techniques known for removing caries from a tooth by a mechanical or a chemical-mechanical treatment, for example by using a mechanical device, or a caries-dissolving solution for loosening the caries-attacked tooth substance and then a mechanical device to physically remove the loosened substance, respectively. These instruments and techniques generally do not distinguish between remineralizable and unremineralizable carious dentine, however, and thus may remove all carious dentine prior to the filling procedures.

The most common test for determining whether a sufficient amount of carious dentine has been removed from a tooth is tactile inspection with a dental probe. During such an inspection the sharp point of the probe is dragged over the tooth surface, which generates a recognizable sound when healthy dentine is encountered. However, that method cannot reliably discriminate between remineralizable and unremineralizable dentin, because the sounds of a probe being dragged over one cannot be distinguished from the other. As a result, a dentist who relies on this test may remove both remineralizable and unremineralizable dentin when the former should, if possible, be preserved.

In a conventional chemical-mechanical approach, caries is removed from a tooth by a caries-dissolving solution that dissolves collagen, which basically forms the organic component of both remineralizable and unremineralizable carious dentine, as well as of sound dentine. However, this means that either type of dentine may be removed, and the extent of the removal therefore has to be controlled. For example, the dentist may treat a carious tooth with such a caries-dissolving solution repeatedly, until he decides that the carious dentine has been sufficiently removed to permit the cavity to be filled. This process can result in the removal of remineralizable dentin also, which is not desirable.

WO 00/18315 discloses an instrument comprising an instrument head with a number of curved longitudinal scraping elements for scraping away caries-softened tooth substance, in order to roughen a hard caries surface more efficiently and to reduce the time necessary for treatment.

WO 00/35368 discloses a dental burr adapted to be motor-driven by a drilling apparatus, the burr having a working surface including metal, ceramic, or plastic cutting elements which deflect or abrade upon encountering material at or above a preselected hardness corresponding to the lower limit of hardness of non-carious dentin. The dental burr is constructed of metal, ceramic or plastic.

WO 00/12022 relates to a dental instrument for removing caries-attacked dentin in connection with chemical-mechanical treatment of caries by a caries-dissolving solution, the instrument comprising an instrument head with a number of scraping elements or bristles for scraping away the loosened caries tooth substance.

WO 98/29053 discloses an instrument comprising at least one non-rotating instrument head for manually scraping away caries-attacked dental material loosened with a caries-dissolving solution applied to the caries, wherein the instrument head is star-shaped with a number of scraping elements having a curved outer contour for excavating loosened caries-attacked dental material.

DE 199 28 054 A1 discloses a dental burr for motor-driven operation to remove caries-attacked dentin, the burr comprising a brush with bristles that are arranged in the form of bunches or tufts, the bristles being harder than caries-attacked dentin and softer than healthy dentin.

### Summary of the Invention

In a preferred embodiment of the invention, a dental instrument for use in a procedure for removing unremineralizable carious dentin from a tooth while generally maintaining remineralizable carious dentin is disclosed, wherein the instrument comprises scraping elements made of plastic. The term "generally maintaining" within the scope of this specification can also be understood as "at least in part maintaining."

The dental instrument is preferably adapted to be manipulated by hand to scrape the tooth surface with the scraping elements, and therefore comprises a handle portion that can be grasped by a user. The scraping elements are otherwise generally not movable relative to the handle portion in the same manner as bristles. The dental instrument preferably has no moving parts, other than parts that deflect relative to each other when a force is applied by the person holding the dental instrument.

In a preferred embodiment of the invention, the instrument comprises an instrument head and an instrument body. Preferably the instrument body comprises the handle portion and a preferably curved or angled instrument neck connecting the instrument head with the handle portion.

The scraping elements are preferably protrusions that extend from an area at an end of the instrument, and they form at least a part of the instrument head. The instrument head thus preferably comprises the scraping elements. The instrument head may comprise a component or interface by which it is connected to the instrument body, or the entire instrument may be formed in one piece. Optionally, the instrument head comprises a support carrying the scraping elements, however, it may be provided that the components of the instrument head are integrally formed (formed in one piece). Preferably the protrusions are spikes having a generally pyramidal or generally conical shape. In this context the term "generally pyramidal shape" also includes three-dimensional structures having a polygonal base and a plurality of tapering edges, such as a tetrahedron, a pyramid, and other polyhedrons, wherein the edges may have different lengths. The term "generally pyramidal shape" also includes structures of the type mentioned, with edges that are curved rather than straight. At least one of the scraping elements of the instrument head may be reduced in diameter or thickness along its longitudinal axis, and in particular may be conical.

The scraping elements are preferably arranged so that they protrude from a common point or an area, such as from a spherical support. The free ends of the scraping elements preferably define an imaginary generally spherical shape (referred to simply as a sphere). The free ends of the scraping elements are preferably uniformly distributed over this sphere, so as to provide a relatively uniform scraping effect in different directions. Preferably the longitudinal axes of the individual scraping elements are arranged non-parallel relative to one another. In a preferred embodiment, the longitudinal axes extend radially outwardly from the center of the instrument head. The instrument can be used for a variety of clinical situations related to the treatment of carious teeth.

In another embodiment, the instrument head comprises two or more different types of scraping elements distributed non-uniformly with respect to the instrument head, to provide different scraping effects depending on the direction in which the instrument is moved relative to the tooth. For example, one portion of the instrument head may have long, thin scraping elements, and another portion may have short, thick scraping elements. It may also be provided that the free ends of each of these types of different scraping elements define a sphere (as defined above) with the free ends being uniformly distributed over this sphere. For example the free ends of the longer scraping elements define a sphere with a larger diameter than a sphere defined by the free ends of the shorter scraping elements.

In another optional embodiment, the instrument head comprises two or more different types of scraping elements, with each type of element being uniformly distributed with respect to the instrument head. Their free ends are also preferably uniformly distributed and also define a sphere.

The scraping elements are preferably arranged such that their free ends define a generally spherical shape with an outer diameter of between 0.3 mm to 3 mm, for example between approximately 0.5 to 1 mm. Such dimensions generally allow the instrument to access affected portions of a tooth within a person's mouth.

Preferably the scraping elements used for scraping carious dentin are adapted to leave remineralizable carious dentin generally unaffected. In a preferred embodiment, the dental instrument comprises scraping elements having a Knoop hardness of less than the minimum Knoop hardness of healthy dentin, which is approximately 48, and optionally less than the minimum Knoop hardness of remineralizable carious dentin, which is approximately 25. Preferably the scraping elements have a Knoop hardness of generally less than 48, preferably between 10 to 45. In a further preferred embodiment the scraping elements have a Knoop hardness of between 15 to 30, in more particular of between 18 to 25 and in even more particular of between 19 to 23. Preferably the scraping elements have a Knoop hardness of at least one of 10, 15, 18 and 19 but less than one of 45, 30, 25 and 23. The scraping elements may be made of a material having a Knoop hardness corresponding to one of the ranges or values mentioned above.

It is also possible that the scraping elements are made of a material or a combination or blend of materials having different hardnesses, but in combination providing an overall Knoop hardness according to one of the ranges or values mentioned above.

In a preferred embodiment the scraping elements are made of plastic, whereby the ability of the instrument to remove remineralizable carious dentin is self-limiting. Thus when the scraping elements are used for scraping away carious dentin they can remove unremineralizable carious dentin, but generally not remineralizable carious dentin, because the scraping elements have a material hardness which does not allow for penetrating into remineralizable carious dentin. Instead, the plastic tends to deform before any remineralizable carious dentin can be removed, which is beneficial for the reasons noted above. The material itself, because of its hardness, provides this self-limiting effect independently from the design of the scraping elements. As mentioned above the material hardness is preferably related to the material hardness of the scraping elements actually provided on the instrument, and not just in general to the material used to form the scraping elements.

Generally the scraping elements can be made of any suitable plastic material. The scraping elements preferably are made of a plastic material selected from among PE (polyethylene), PP (polypropylene), POM (polyoxymethylene), ABS (acrylonitrile-butadiene-styrene), PBT (polybutadiene terephthalate), PA (polyamide), PS (polystyrene), PC (polycarbonate), and mixtures or blends thereof.

It is preferred that the instrument of the invention does not comprise any metal, except for metal that is possibly inherently contained (as an additive, for example) in the plastic materials.

Preferably the instrument comprises less than 50 scraping elements, and more particularly between 5 and 20, and preferably 16 scraping elements. With such a number of scraping elements, and with the shape of the scraping elements provided, a self-maintaining or self-cleaning effect is provided. This means that because there is enough space between the scraping elements, material in the space can be displaced by further material removed from the tooth. Otherwise material could accumulate and clog the space between the scraping elements, for example if the space is too small or if it has undercuts or the like. In this case the overall scraping effect of the scraping elements would be worse because the scraping elements would probably not sufficiently project from the accumulated tooth material.

Preferably the remainder of the instrument of the invention is also made of plastic, and more preferably the entire instrument including the scraping elements is integrally made of at least one plastic material, which can be of the same type as mentioned above for the scraping elements.

If an instrument according to the invention comprises two or more materials, such a combination of materials can be a blend, or different materials can be used for different parts of the instrument (to take advantage of different material properties such as the hardness or elasticity of the different materials). Furthermore, different materials can be co-extruded or used to coat or enclose one another to yield certain advantages. In an alternative embodiment, the instrument is made from a material which can be sterilized at higher temperatures without deterioration or deformation, such as polyetherketones, polyetheretherketones or polyethersulfones. Sterilizable material generally needs to be sufficiently physically and chemically stable with respect to temperatures of more than 100 °C, because sterilization is often achieved by heat treatment with pressurized water vapor at temperatures of up to 120 °C. Many polymeric materials suffer from deterioration under such conditions, and thus would not be suitable for use in an instrument according to the present invention if the instrument were to be sterilized for reuse.

In another preferred embodiment, the dental instrument comprises an elastic section. The elastic section is adapted to deform, deflect, bend or yield when a force is applied to the dental instrument, for example when it is used by a dentist during a treatment of a tooth. The deformation of the elastic section allows a person to limit the working force applied to the tooth. The term "working force" relates to the force the scraping elements exert on the tooth when the user of the instrument applies a force to it. The term "deformation" refers to the response of the elastic section of the dental instrument under the influence of the working force.

Preferably, the embodiments having an elastic section comprise scraping elements having a hardness greater than that of remineralizable carious dentin, and optionally a hardness that is also greater than that of sound dentin. This means that the scraping elements generally would allow for at least the partial removal of remineralizable carious dentin, and optionally sound dentin respectively. Limiting the working force then provides for limiting of the abrasive effect of the scraping elements to the dentin of the tooth, i.e. limiting of the amount of dentin being removed during scraping. Generally the abrasive effect of a scraping element of this embodiment is higher for softer dentin, and for higher working forces. This means that to remove soft (unremineralizable) carious dentine from slightly harder (remineralizable) carious dentine, a relatively low working force is required, to insure that not too much remineralizable carious dentine is removed.

The elastic section additionally may reduce the pain felt by the patient during a treatment, because the probability that a patient feels pain during treatment of a tooth is lower when lower working forces are applied.

In a preferred embodiment the elastic section effectively limits the working force. In this case the elastic section is adapted to bend or yield when a certain working force level is reached. Accordingly, it is generally not possible for a user to apply a too high working force to the tooth because the elastic section would bend or yield before such forces can be applied.

In another preferred embodiment of the invention, the elastic section is adapted to provide higher forces than the maximum desired working force, but allows a user to control the working force so that it remains below such a maximum desired working force. In this embodiment, a user is provided with a more rigid instrument overall than an instrument having an elastic section which effectively limits the working force as mentioned above. This is generally advantageous because a more rigid instrument feels more comfortable to a user, such as a dentist, who is accustomed to working with rigid metal instruments.

Because the elastic section of this embodiment deforms when a user applies force to the instrument, the user by observing the deformation and adapting the applied force accordingly can control the working force so that it stays within an acceptable range. Thus, he or she can scrape away unremineralizable carious dentin while generally preserving healthy and remineralizable carious dentin in keeping with the principles of the present invention.

Furthermore, when the user increases the force applied to the instrument (the applied force), for example by pushing down the instrument more heavily during treatment, the elastic section absorbs part of that energy by deformation. The remaining energy, or force, is applied to the tooth. In other words, the energy applied by the user is used to deform the elastic section as well as to scrape the tooth.

The deformation exhibited by the elastic section is preferably an essentially elastic (non-permanent) deformation, meaning that the instrument when subjected to forces below a certain maximum level will return to essentially its initial shape and position when the force is removed.

Preferably the elastic section is a portion of the instrument body and forms at least a part of the instrument neck. Alternatively the elastic section forms a part of the handle portion. In still another alternative, at least a portion of the handle portion itself is elastic, thus forming the elastic section. In other words such an alternative embodiment does not necessarily have a distinct elastic section but is itself overall elastic.

Preferably the elastic section is made of the same material as the instrument, but perhaps with a different cross-section or other shape than the area(s) around it. Alternatively the elastic section is made of a different material. In latter case the instrument may be manufactured by two-component injection molding.

The elastic section can be provided as one or a combination of a resilient member, a spring or a curved or wavelike portion. The elastic section may be flexible due to its material properties (as with polymers selected for their desirable flexibility characteristics), or due to a combination of its material properties with its mechanical or physical structure (as with a hinged, or spring-like structure).

In a preferred embodiment, the elastic section is formed as a narrowed portion, for example a portion having a smaller cross-sectional area with respect to the cross-sectional area of the handle portion. This can provide an instrument with a relatively rigid handle portion, but an elastically deformable elastic section.

In another embodiment the dental instrument comprises an elastic section having a cross-section selected from among an oval, circular and rectangular shape, an U- and V-shape (including multiple such profiles in the form of a wave). The elastic characteristics of the elastic section may be provided by the depth of the U- or V-shape or waves, by the width and/or thickness of cross-sections, by the materials the components are made of, and/or other parameters.

In a further embodiment the elastic section comprises the cross-sectional shapes mentioned above (e.g. a circular shape), and the elastic section at least in part forms a helical spring. The spring may be a contracted spring (sometimes referred to as a spring on block), and preferably is a coil having a plurality of windings,
wherein adjacent windings touch each other when in a normal state. The spring may be a polymeric spring or a spring made of a metal such as steel. A predetermined working force may be controlled by the tension with which the individual windings of the spring hold together, by the diameter and /or the length of the spring, by the material of the spring and/or other parameters.

The term "predetermined," when related to the level of a force, refers to a fixed value or range of values that are determined by the designer or by the user of an instrument, or both. For example, the designer may design the instrument so that the elastic section has a certain rigidity because of the dimensions of the elastic section and the material of which it is made. The dimension of the elastic section may be adjustable by a user, for example by reduction of the length of the elastic section by telescopically displacing a part of it into a rigid component of the instrument.

The elastic section may have a non-linear spring characteristic. The spring characteristic generally represents a relationship between the degree of deformation of an elastic part and the corresponding force required to cause that deformation. The elastic section preferably has a spring characteristic that provides:
(a) in a first range of low applied forces a basic elasticity,
(b) in a second range of higher applied forces a higher elasticity, and
(c) in a third range of even higher forces lower elasticity (e.g. as under (a)),
wherein the applied forces in the second range correspond to resulting working forces in a desired predetermined range providing an optimum treatment of a tooth. In other words, the elastic section preferably has a spring characteristic that provides a "soft spot" upon reaching a certain predetermined working force, which enables the user to sense the change and limit the applied force, and therefore the working force. The user thus does not need to actually see the deformation of the elastic section, but can manually sense the appropriate working force during a treatment procedure.

A lower elasticity of the elastic section corresponds to a higher rigidity and vice versa.

In an alternative, the elastic section has a spring characteristic that within a first range of low working forces provides a rather high elasticity, so that the instrument provides a rather soft "touch" in use. However, within a second range after a certain predetermined working force has been exceeded provides a rather low elasticity so that the instrument provides a rather hard "touch" in use. Preferably the transition between those ranges is rather abrupt. Thus, a user of the instrument is provided with a clear indication when the maximum working force is reached. The user can take such an indication as a signal to reduce the applied force, and thus to reduce the working force.

It may also be provided that the elastic section (for example a contracted spring) is inelastic in a first range when the working force is below a predetermined value, and elastic in a second range above that value. Such a configuration is advantageous to signal to a user a certain minimum working force that is required for effective treatment of a tooth.

It may further be provided that the elastic section (for example the U- and V-shaped embodiments described above) is less elastic in a first range of working forces, and more elastic in a second range of working forces. Such a configuration is especially advantageous to effectively limit the working force if the lower rigidity would not allow the user to apply forces resulting in too high a working force.

In general the user of the instrument may detect the approximate extent of the current working force by observing the degree of deformation of the elastic section. He or she may use the deformation as an indicator of the intensity of the scraping action, and may adjust applied force (and thus the scraping action) accordingly. When the instrument is designed as described above, the user may upon the application of a certain maximum force feel an abrupt increase or "soft spot" in the working force, and would thus know that the maximum working force to be applied to the tooth has been reached, and that additional force should not be applied.

The dental instrument can preferably be used to scrape in different directions without changing the orientation of the instrument, and thus the elastic section preferably has an omni-directional elasticity, meaning that the deformation performance in response to an applied force is generally the same for forces applied from any direction. Alternatively, it may be provided that the elastic section has different deformation characteristics when subjected to forces from different directions. In a preferred embodiment, the elastic section has an anisotropic spring characteristic, meaning that the spring characteristic is a function of the direction the force is applied to the elastic section. By using an instrument with an anisotropic spring characteristic, the working force may be tailored such that in one direction the working force is limited to a lower value, whereas in other directions the working force can have a higher value. Such an anisotropic spring characteristic furthermore helps to stabilize the dental instrument (for example in the lateral direction) and helps to control the working force applied to the tooth.

In a further embodiment, the dental instrument comprises a re-settable deformable section for limiting the working force. In this regard "re-settable" means that, in contrast to the elastic section described above, the re-settable deformable section does not automatically return to its initial shape or position after the applied force is removed, but can be reset by applying a force in an opposite direction of the working force. The re-settable deformable section is adapted to permanently deform, deflect, bend or yield when a force in excess of a predetermined force is applied to the dental instrument, but may be returned into its initial position in the manner described above. Preferably this re-settable deformable section is provided in the form of a slipping clutch. The slipping clutch transmits forces up to a certain approximate predetermined value, and starts slipping when the working force exceeds that predetermined value so that a maximum predetermined working force is not exceeded, but the slipping clutch can be reset so that the instrument can be used again. A return spring may be combined with the slipping clutch so as to provide an elastic section as mentioned above.

Preferably the slipping clutch comprises two opposed surfaces that contact each other, which upon the application of a predetermined working force in a certain direction rotate or slip with respect to each other. Such an embodiment may provide for transmitting greater force in one direction than another, but embodiments providing for transmission of similar forces in different or all directions are also encompassed. This could for example be achieved by use of a ball and socket configuration, which could include a detent.

The maximum transmittable force causing the clutch surfaces to slip with respect to each other may be controlled by adjusting the pressure with which the two clutch surfaces are pressed against each other, the surface and other characteristics and materials of the opposed surfaces, and other known factors. Such a clutch can be reset and can therefore the instrument can be reused, which is desirable even for an instrument that is intended to be disposable. This is because the predetermined maximum working force may be exceeded several times during the treatment of one tooth, and a user normally would not (or not often) like to exchange the instrument during a single treatment.

The dental instrument may have an adjustable element for adjusting the deformation limit. For example, an adjustable screw can be tightened to increase the pressure between the clutch surfaces, and thus may be used to adjust a working force limit. This can enable users who prefer a higher or a lower deformation limit, corresponding to a higher or lower working force, to adjust the instrument to suit their preferences.

It may be provided that the dental instrument of the invention comprises both an elastic section and scraping elements according to the description above. It may further be provided that the scraping elements of an instrument that also has an elastic section can have a hardness as specified above, for example a hardness that is less than that of sound dentin or remineralizable carious dentin.

The instrument may comprise a reinforcement structure for lowering the elasticity of at least a part of the instrument, or in at least one direction relative to the instrument, thus increasing its stability in the hands of the user.

The dental instrument may comprise a coupling element for releasably securing a part comprising the instrument head to the instrument body so that the instrument head may be exchanged. The coupling element may be of a plug/socket type. Screws or clips may also be used to connect the instrument head to the instrument body. The instrument body may be reusable (and thus should be capable of being sterilized as noted above), and the instrument head and/or a component comprising it may be a single-use part. Single-use parts are advantageous because they do not require expensive sterilization as they are disposed after use. The replacement of a single-use instrument head on a reusable instrument body is an easy and cost-effective way to recreate the inventive instrument at a lower cost than having to replace the instrument entirely. Although the instrument head provides an important effect of the invention, the instrument body may be the more expensive part (because it may be larger than the instrument head and therefore more expensive because of the higher amount of material required to make it).

A further embodiment of the invention provides a method of removing unremineralizable carious dentin from a tooth while generally maintaining remineralizable carious dentin, comprising the use of a dental instrument of the invention.

Another embodiment of the invention relates to a method of removing unremineralizable carious dentin from a tooth while generally maintaining remineralizable carious dentin, wherein the unremineralizable carious dentin is physically removed through use of a dental instrument according to the invention, and the working force applied to the tooth is controllable through an elastic section of the dental instrument.

The dental instrument according to the invention is a valuable aid for removing unremineralizable carious dentin while maintaining at least a part of the remineralizable carious dentin. However, its effectiveness can be further increased when it is used together with a caries-dissolving solution, such as a solution that enzymatically dissolves unremineralizable carious dentin.

According to a further aspect of the invention, a method of treating a caries-attacked tooth with a caries-dissolving solution is described. Suitable caries-dissolving solutions are described in publications including for example PCT/EP 2003/005183 and EP 1 600 141 A2. Both documents are expressly mentioned as a source of disclosure with regard to caries-dissolving solutions and compositions to be used according to the present invention, and the content of both documents are incorporated by reference herein.

In another embodiment of the invention a system for removing unremineralizable carious dentin from a tooth is provided, the system comprising a chemical solution comprising an enzyme which enzymatically dissolves unremineralizable carious dentin while generally maintaining remineralizable carious dentin, and a dental instrument according to the invention.

A further embodiment of the invention relates to a method of removing unremineralizable carious dentin from a tooth, comprising the steps of:
- applying a caries-dissolving solution at least to the carious dentin, the solution comprising pepsin; and
- treating at least the carious dentin with a dental instrument according to the invention.

The present invention also relates to a kit comprising an enzyme being capable of dissolving unremineralizable carious dentin and a dental instrument according to the invention.

The present invention further relates to a kit comprising a dental instrument according to the invention and one or more items selected from among:
- a mixture of at least one biologically active protease and at least one biologically active glycosidase,
- a solution comprising pepsin, and
- a mixture of a collagenase and at least one other protease.
   A suitable caries-dissolving solution may comprise a biologically active protease and a biologically active glycosidase, wherein the proteases and glycosidases are present in an activity ratio of 1,000,000:1 to 1:1,000,000 and the total enzyme activity is at least 2 U/ml.
   A further suitable caries-dissolving solution can comprise water, acid, pepsin and a rheological additive, wherein the pepsin is present at a concentration of 1 to 50,000 U/mg and the composition has a pH value of 3.0 or less and a viscosity of 10 to 1,000 mPas.
   A further suitable caries-dissolving solution can comprise at least two proteases. The combined use of, for example, collagenase and another protease such as proteinase K has an advantageous effect on the degradation of collagen. The degradation of collagen is induced by the enzyme collagenase. This means that collagenase converts the tertiary structure of the collagen in such a way that after the conversion the secondary structure can also be attacked by other proteases. Collagenase alone, however, is not capable of degrading collagen completely. Proteases such as proteinase K or pronase, however, are not capable of degrading structurally intact collagen. Such proteases can degrade collagen only after a previous reaction of collagen with collagenase. Thus, for an efficient degradation of collagen, a combination of collagenase and other proteases is advantageous.
   An enzyme containing solution to be used according to the invention can have a pH-value in the range of about pH 5 to about pH 10, in particular of about pH 6 to about pH 9, in particular of about pH 7 or of about pH 1 to about pH 4.
   A suitable composition can comprise further adjuvants such as complexing agents, enzyme substrates or enzyme effectors. According to the invention, enzyme effectors comprise enzyme activators as well as enzyme inhibitors.
   In all cases, the region in contact with the caries-dissolving solution can be physically treated with a dental instrument according to the invention prior to, during or after application of the caries-dissolving solution, or at more than one point in the treatment. Preferably the caries-dissolving solution is applied to the carious dentin before the dental instrument according to the invention is used for the treatment.
   The preferred exposure time of the enzyme containing composition is in a range of from about 5 seconds to about 5 minutes wherein, depending on the amount of unremineralizable carious dentin present, the exposure times can be reduced or increased accordingly. The exposure time is preferably in the range of about 10 seconds to about 3 minutes, for example in the range of about 15 seconds to 2 minutes or in the range of about 20 seconds to 1 minute.
   Suitable caries-dissolving solutions can have a pH value of less than about 4, in particular less than about 3. Suitable pH values, for example, are within a range of about 1 to about 4, in particular about 1.2 to about 3 or about 1.5 to about 2.5, for example about 2.
   Further details and favorable aspects, which may be applied alone or may be combined in any suitable manner, will be explained with respect to the following drawings, which shall not restrict the scope of the invention but which schematically illustrate the invention.

### Brief description of the drawings

- Fig. 1: is a perspective view of a dental instrument according to the invention;
- Fig. 2: is a perspective view of a magnified portion of the dental instrument according to Fig. 1;
- Fig. 3 - Fig. 5: are perspective views of several embodiments of an instrument neck of the dental instrument according to the invention;
- Fig. 6 - Fig. 8: are views of cross-sections of an instrument neck along the line A-A of fig. 5;
- Fig. 9a - Fig. 9d: are diagrams showing spring characteristics of different elastic sections of the dental instrument according to the invention;
- Fig. 10: is a perspective view of an embodiment of an instrument according to the invention, having a slipping clutch ; and
- Figs. 11A, 11B: are a schematic drawings of an instrument according to the invention, comprising a coupling for securing a part with the instrument head to the instrument body.
- Fig. 12: is a schematic drawing of a geometry of a scraping element according to the invention.

### Detailed Description of the Invention

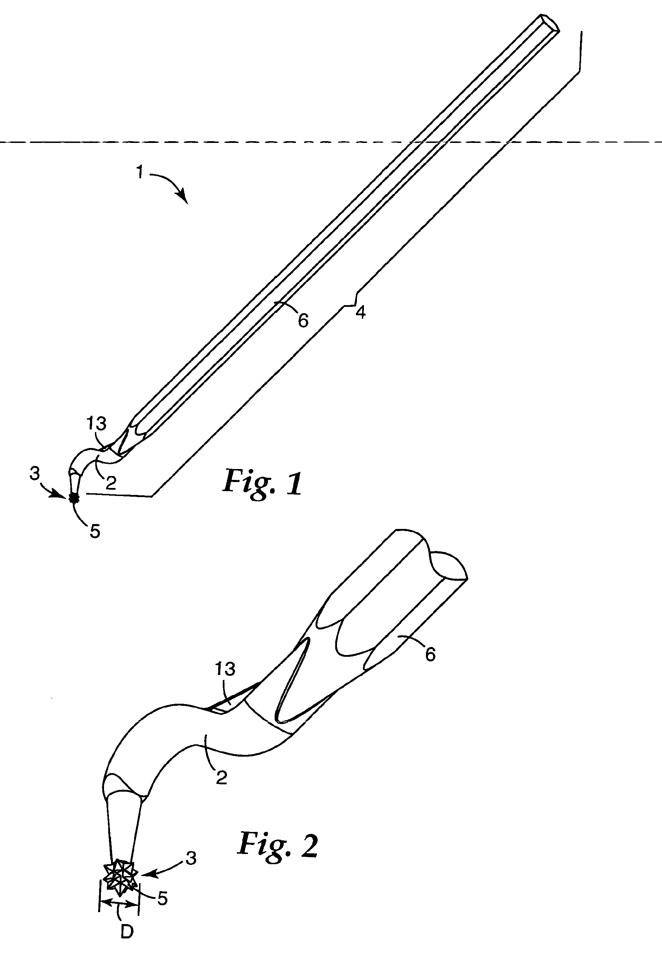

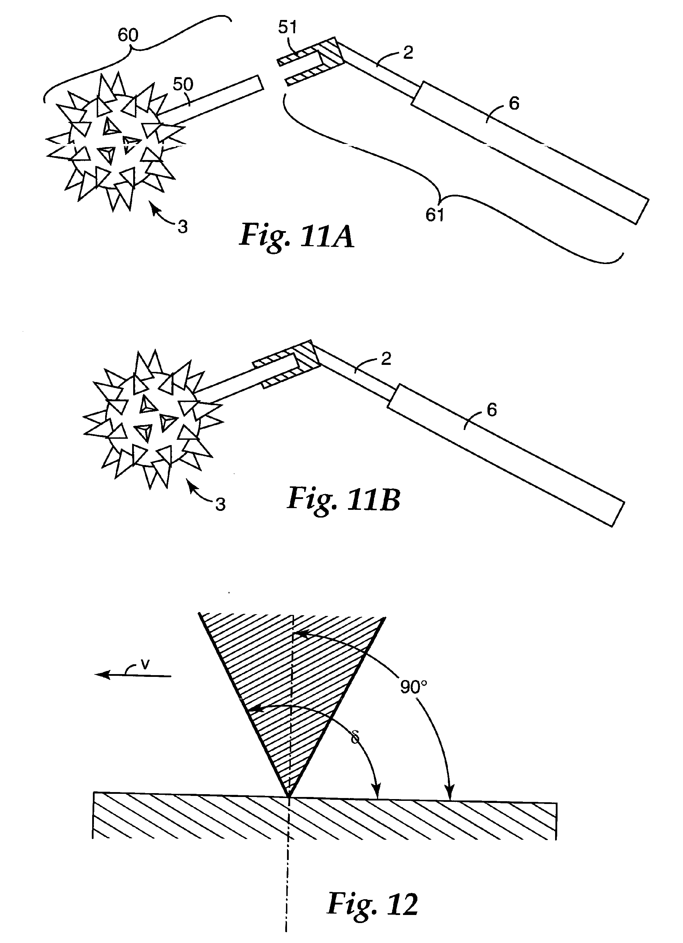

Figures 1 and 2 show a perspective view of a dental instrument 1 according to the invention, comprising an instrument body 4 and an instrument head 3 with scraping elements 5 made of plastic. The instrument body 4 comprises a handle portion 6 by which the instrument can be grasped by a user and an instrument neck 2 adjoining the handle portion 6. The instrument neck 2 preferably has a curved shape and in turn adjoins the instrument head 3. A reinforcement structure 13 may be provided to increase the stability of the instrument neck 2. The reinforcement structure 13 is preferably provided at the instrument neck 2, and when provided increases stability in at least one direction. Preferably the instrument head 3, the instrument neck 2 and the handle portion 6 are integrally formed, for example molded in one piece. The instrument head 3 may also be connected to the instrument neck 2 by a coupling with coupling members 50, 51 (shown in Figs. 11A, 11B) by which the instrument head 3 is releaseably secured to the instrument neck 2. Alternatively the instrument head 3 together with the instrument neck may be connected to the instrument handle 6 by a coupling element (not shown).

It is preferred that the handle portion 6 has a minimum cross-sectional dimension of 4 mm. Preferably the handle portion 6 is of a non-circular cross-sectional shape, e.g. hexagonal. The length of the handle portion 6 is preferably at least 50 mm to enable a user to grasp and manipulate it easily.

The scraping elements 5 are formed as sharp-edged asymmetric pyramids each having a substantially rectangular base. The overall diameter D of the instrument head 3, including the scraping elements, is preferably approximately 0.5 - 1.0 mm, and more preferably approximately 0.7 mm. An instrument (1) as shown in Figures 1 and 2 can be manufactured by injection molding. The design of the instrument as shown allows for integrally molding (molding as one piece) of all components of the instrument in an inexpensive standard mold.

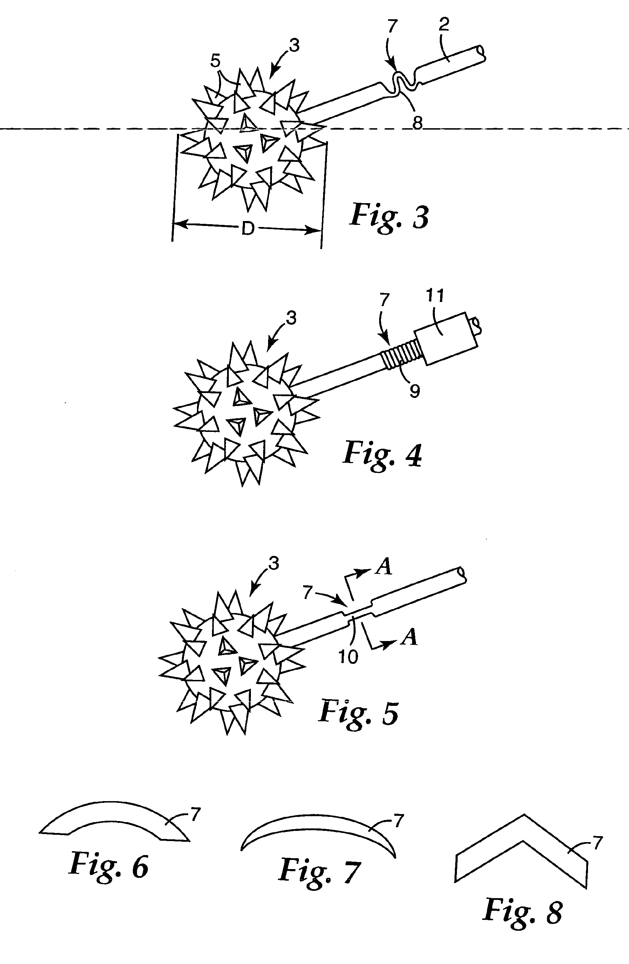

Figures 3 to 5 show the instrument head 3 with various embodiments of an elastic section 7 for controlling the force to be transmitted from the instrument neck 2 onto a tooth by the scraping elements. In general, the elastic section 7 transmits force applied by a user (the applied force) to a tooth surface as a working force, and it deforms to a degree that depends on the force applied. As described above, such deformation allows the user, by observing the deformation and accordingly adjusting the applied force, to control the working force so that it stays within an acceptable range.

In Fig. 3 the elastic section 7 is formed as a wavelike structure 8 that deflects when an applied force is applied to the instrument 1. The user may observe the degree of deformation of the wavelike structure 8 and use that information as an indicator of the approximate working force that is being applied to the tooth. The number, size, shape, and frequency of the waves in a wavelike structure may be selected as desired.

In Fig. 4 the elastic section 7 is formed as spring on block 9, which comprises windings which lay on top of each other forming a tube, the length of which may be adjusted by optional adjusting element 11. The spring 9 is pre-tensioned, meaning that the individual windings lie on top of each other under tension and adjacent windings touch each other with a positive pressure. Once the applied force exceeds a predetermined value, the spring bends and the working force transmitted to the tooth is effectively limited, or at least the increase in working force applied to the tooth with increasing deformation of the spring is reduced. In the latter case the working force applied to the tooth is not effectively limited by the spring, but can be limited by the user as mentioned above. Adjusting element 11 can adjust the length of the spring such that the maximum value of the working force may be predetermined. The tension within the spring on block 9 may be different between windings, and in particular gradually increase or decrease from one winding to another, or the thickness or the diameter of the windings may be different such that the maximum transmittable force may be adjusted with help of the adjusting element 11.

Fig. 5 shows an instrument head 3 comprising an elastic section 7 with a U- or V-shaped cross-section. Figures 6 to 8 show different possible cross-sectional shapes of the elastic section 7 along the line A-A. Due to the V- or U-shape of the cross-section, the maximum working force applied to the tooth is effectively limited, because the structure provides for a collapse of the elastic section 7 when the deformation or working force exceeds a predetermined value. Other cross-sectional shapes are also encompassed within the scope of the present invention.

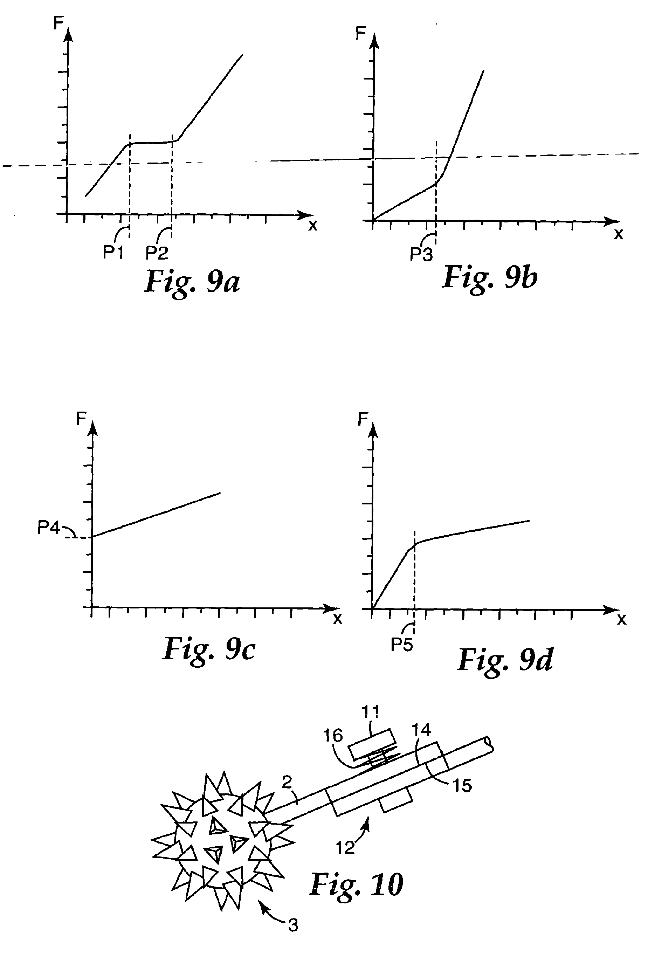

Fig. 9a to Fig. 9d show spring characteristics of different elastic sections 7 of embodiments of the dental instrument according to the invention. The deformation with regard to an applied force (= working force) F, shown along the vertical axis, is a displacement X, shown along the horizontal axis.

The curve in Fig. 9a shows a spring characteristic having a predetermined working force range between points P1 and P2, which correspond to the working range. Between those points the elastic section provides a rather high elasticity (or low rigidity). In contrast, beyond this range of P1 and P2 the elastic section provides a rather low elasticity (or high rigidity). In other words a user would feel a relatively rigid or hard "touch" when applying a force beyond the range P1 - P2 but a relatively soft "touch" when applying forces resulting in working forces as desired. The user may use the instrument at working range of between P 1 and P2 for treating the tooth, which corresponds to a predetermined working force that is believed to provide good treatment results (for example by removing unremineralizable carious dentin, but not remineralizable carious dentin). Due to the relatively rigid characteristics of the elastic section outside the range of P1 to P2, the user senses a "soft spot" within the range, and can adjust the applied force appropriately.

Fig. 9b shows a spring characteristic having a predetermined maximum working force at point P3. Below this maximum working force (to the left of P3 in Fig. 9b) the elastic section provides a rather high elasticity (or low rigidity) and above the maximum working force (to the right of P3 in Fig. 9b) the elastic section provides a rather low elasticity. In other words, a user would feel a relatively rigid or hard touch when trying to apply forces above point P3, but a relatively soft touch when applying forces resulting in working forces as believed to be appropriate for good treatment results as noted above. Such a characteristic provides a user of the instrument a clear sense of when the maximum working force is reached, so that he or she can change the applied force appropriately to reduce the working force.

Fig. 9c shows a spring characteristic as could be provided, for example, by a contracted spring (as shown in Fig. 4). As can be taken from the diagram a certain force is required to cause deformation of the elastic section. This force would correspond to the force necessary to first overcome the pretension of the spring windings of a contracted spring, for example. The point P4 in this case would correspond to a minimum working force believed to be required for an effective treatment. A user of an instrument providing such a characteristic would have, overall, a rigid instrument when used below the minimum working force, and an elastic one when used above that force. Therefore such an elastic section can be used to indicate to a user a certain minimum working force required for effective treatment of a tooth. In other words, the user would see and feel no deformation of the elastic section until a sufficient working force is being applied to the tooth surface.

Fig. 9d shows a spring characteristic having a first and a second range. The transition of the first to the second range corresponds to the maximum working force, shown as P5. Such a characteristic could for example be provided by a U- or V-shaped elastic section as illustrated in Figs. 6 to 8. An instrument having an elastic section providing such a characteristic can be used to effectively limit the working force, because the second range does not provide for the transmission of too high a working force. This would be the case, for example, if the working force does not increase beyond the point P5 but stays constant or decreases.

Fig. 10 shows an instrument head 3 that is coupled to the instrument neck 2 via a slipping clutch 12, which helps to control the working force and which may be adjusted by the adjusting element 11. The slipping clutch 12 comprises two surfaces 14, 15 that engage with one another through friction as they are pressed together by a resilient member 16 (for example a compression spring) compressed by the adjusting element 11. The adjusting element 11 can be used to change the maximum working force that may be applied to the tooth by changing the pressure (and therefore the friction) between the surfaces 14,15. As shown, the adjusting element can be an adjusting screw which can be turned to compress or relieve the resilient member to increase or decrease the friction between surfaces 14, 15 respectively. An increase of the maximum working force can for example be achieved by compressing the resilient member 16 via the adjustment element 11 so as to increase the friction between the surface 14, 15.

Fig. 11A and Fig. 11B schematically show an instrument with an exchangeable part 60 comprising the instrument head 3. The exchangeable part 60 has a first coupling member 50. The instrument body 61 comprises a mating coupling member 51 allowing for securing the exchangeable part 60 to the instrument body 61. Either the instrument body 61 or the exchangeable part 60 may comprise the male or female coupling member and the other part the corresponding mating coupling member. Fig. 11A shows the instrument with the exchangeable part 60 detached from the instrument body 61. Fig. 11B shows the instrument with the exchangeable part 60 attached to the instrument body 61.

As shown in Fig. 12, it is further preferred that the scraping edges comprise a structure allowing for scraping rather than cutting. Thus, the angle "d" of the leading edge (which is the edge oriented to the scraping direction "v") relative to the surface being scraped is preferably greater than 90°. Such a design allows the scraping elements to be dragged smoothly over the tooth surface to be treated, which contributes to a relatively pain-free and convenient treatment for a patient. Further, such a design for the scraping elements generally extends their durability - the time that the scraping elements effectively can be used for a treatment of a tooth. Another advantage is achieved because scraping elements of such a general geometry enable unidirectional scraping, meaning that the scraping element can be shaped (in contrast to cutting elements generally having an angle "d" of less than 90°) so as to provide generally the same scraping effect in all directions. For example in the embodiment shown, the scraping effect in the direction denominated as "v" would be generally the same as in the opposite direction.

The present invention has now been described with reference to several embodiments thereof It will be apparent to those skilled in the art that many changes can be made in the embodiments described without departing from the scope of the present invention. Thus the scope of the present invention should not be limited to the structures described in this application, but only by structures described by the language of the claims and the equivalents of those structures.

## Claims

1. Dental instrument (1) for use in a procedure for removing unremineralizable carious dentin from a tooth while generally maintaining reminerizable carious dentin, the instrument (1) comprising scraping elements (5) made of plastic.

2. Dental instrument (1) according to claim 1, wherein the instrument (1) is adapted to be manipulated by hand to scrape the scraping elements over the tooth surface.

3. Dental instrument (1) according to claims 1 or 2, comprising a handle portion (6) which can be grasped by a user.

4. Dental instrument (1) according to any of the preceding claims, wherein the scraping elements (5) are protrusions extending from an area at an end of the instrument.

5. Dental instrument (1) according to claim 4, wherein the protrusions are spikes.

6. Dental instrument (1) according to claim 5, wherein the spikes have a generally pyramidal shape

7. Dental instrument (1) according to claim 5, wherein the spikes have a generally conical shape.

8. Dental instrument (1) according to any of the preceding claims, wherein the scraping elements (5) form at least a part of an instrument head (3) of the instrument (1).

9. Dental instrument (1) according to any of the preceding claims, wherein the scraping elements are preferably arranged such that their free ends define a generally spherical shape with an outer diameter of between 0.3 mm and 3 mm.

10. Dental instrument (1) according to any of the preceding claims, wherein the scraping elements (5) used for scraping carious dentin are adapted to leave remineralizable carious dentin generally unaffected.

11. Dental instrument (1) according to any of the preceding claims, wherein the scraping elements (5) have a Knoop hardness that is less than that of healthy dentin.

12. Dental instrument (1) according to any of the preceding claims, wherein the scraping elements have a Knoop hardness that is less than that of remineralizable carious dentin.

13. Dental instrument (1) according to any of the preceding claims, wherein the scraping elements (5) have a Knoop hardness of between 10 to 45.

14. Dental instrument (1) according to any of the preceding claims, wherein the scraping elements (5) have a Knoop hardness of between 15 and 30.

15. Dental instrument (1) according to any of the preceding claims, wherein the scraping elements (5) are made of a plastic material selected from among PE (polyethylene), PP (polypropylene), POM (polyoxymethylene), ABS (acrylonitrile-butadiene-styrene), PBT (polybutadiene terephthalate), PA (polyamide), PS (polystyrene), PC (polycarbonate), and mixtures or blends thereof

16. Dental instrument (1) according to any of the preceding claims, wherein the instrument head (3) comprises between 5 and 20 scraping elements (5).

17. Dental instrument (1) according to any of the preceding claims, further comprising an elastic section (7).

18. Dental instrument (1) according to claim 17, wherein the elastic section (7) comprises a profile having a cross-section selected from among an oval, circular and rectangular shape, an U- and V-shape.

19. Dental instrument (1) according to claim 18, wherein the elastic section (7) at least in part forms a spring (9).

20. Dental instrument (1) according to any of the claims 17 to 19, wherein the elastic section is adapted to deform, allowing the working force applied to the tooth to be limited.

21. Dental instrument (1) according to any of the preceding claims, comprising a coupling element (15) for releasably securing a part comprising the instrument head (3) to the instrument body (4).

22. Dental instrument (1) according to any of the preceding claims, wherein the instrument (1) comprises a reinforcement structure (13) for lowering the elasticity of at least a part of the instrument (1).

23. Method of removing unremineralizable carious dentin from a tooth, comprising the use of a dental instrument (1) according to any of claims 1 to 23.

24. Method of removing unremineralizable carious dentin from a tooth while generally maintaining remineralizable carious dentin, wherein the unremineralizable carious dentin is physically removed through use of a dental instrument (1) according to any of the preceding claims 1 to 22, and the working force applied to the tooth is controllable through an elastic section (7) of the dental instrument (1).

25. System for removing unremineralizable carious dentin from a tooth while generally maintaining remineralizable carious dentin, comprising
- a chemical solution comprising an enzyme which enzymatically dissolves unremineralizable carious dentin while generally maintaining remineralizable carious dentin; and
- a dental instrument (1) according to any of the preceding claims 1 to 22.

26. Method of removing unremineralizable carious dentin from a tooth, comprising the steps of:
- applying a caries-dissolving solution at least to the carious dentin, the solution comprising pepsin; and
- treating at least the carious dentin with a dental instrument (1) according to any of the claims 1 to 22.

27. Kit comprising an enzyme being capable of dissolving unremineralizable carious dentin and a dental instrument (1) according to any of the claims 1 to 22.

28. Kit comprising a dental instrument (1) according to any of the claims 1 to 22 and one or more items selected from among:
- a mixture of at least one biologically active protease and at least one biologically active glycosidase,
- a solution comprising pepsin, and
- a mixture of a collagenase and at least one other protease.
